# EUROPEAN PATENT SPECIFICATION

(11) **EP 3 965 125 B1**
(45) Date of publication and mention of the grant of the patent: **25.10.2023**
(21) Application number: 21194201.6
(22) Date of filing: 01.09.2021
(51) Int. Cl.: H01B 13/34, B29C 63/18, B65C 3/02

(54) **A DEVICE FOR THE AUTOMATION OF THE LABELLING OF ELECTRICAL CABLE TERMINALS**
VORRICHTUNG ZUR AUTOMATISIERUNG DER MARKIERUNG VON ELEKTRISCHEN KABELENDEN
DISPOSITIF POUR L'AUTOMATISATION DE L'ÉTIQUETAGE DE TERMINAUX DE CÂBLE ÉLECTRIQUE

(30) Priority: 02.09.2020 IT 202000020881
(43) Date of publication of application: 09.03.2022
(73) Proprietor: KM CORPORATE s.r.l., 35010 San Giorgio delle Pertiche (PD) (IT)
(72) Inventor: Carlotto, Vladimiro, 35010 San Giorgio delle Pertiche PD (IT)

(56) References cited:
- EP-A1- 0 218 000
- EP-A1- 2 452 884
- EP-A1- 3 459 870

## Description

### Field of the invention

The field of the invention relates to a device for automating the labelling of electrical cable terminals by means of a label inserted on the end of the cables themselves.

### Prior art

The applicant has already presented a similar device for the automation of labelling, the object of patent IT102016000030032 and patent EP3459870.

An example of device for the automation of the labelling of electrical cable terminals is shown in EP2452884A1, EP3459870A1 and EP0218000A1.

This device has proven to be adequate from many points of view, for the speed with which it carries out the various production steps, for its reliability over time, for its cost-effectiveness both for the marking phase, and for the materials used. Furthermore, with the most recent innovation of writing on the outside of the tube that acts as a label, a system that has replaced the expensive method of inserting a previously printed label into a special housing joined to the end part. However, the aforementioned device has some limitations.

One of the limitations is that it is not flat and quite thin at the writing point due to its rounded non-flat shape.

A further limitation consists in the fact that the limited thickness does not confer sufficient strength, while to achieve an adequate strength it would need to be much thicker, which would greatly limit the range of cross-sections of the wires, and consequently there would be a considerable increase in the cross-sections of the labels.

Other drawbacks for the labels of the prior art occur due to the fact of having to use a label made from a pair of tubes joined together in pairs, effectively increasing the overall dimensions, and due to the fact that the aforementioned labels can be printed only after having been completely or almost completely flattened, to obtain a moderately flat printing surface.

Furthermore, with the most recent innovation of writing on the outside of the tube with an ink jet printer or with a thermal transfer printer, a fair length of the tube needs to be available and therefore the printing must be carried out on a certain number of labels earlier than the two that are inserted into the conductor. Unfortunately, this is a significant drawback in the event that the printed labels that had been readied to be inserted are rejected, in fact this requires the label to be redone, which therefore means interrupting the wiring sequence in progress and waiting for the already marked labels to be used so that the two rejected labels can be re-marked.

The above-mentioned drawback has been overcome with the new invention, which has been conceived in such a way that despite having two strips with different sections to cover a wider range of diameter of wires, it can interchangeably choose one of the two sections in a programmable way and write only on the one being processed in order to be able to replace it in the case of a discarded cable, without interrupting the sequence in production.

The object of the invention is intended to make available a device that exceeds the limits of the previous implementation.

### Objects of the invention

A principal object of the present invention is to make available an automated labelling device capable of automating the labelling process that uses a label whose writing does not fade over time.

An equally important object of the present invention is to make available an automated labelling device whose processing phases and steps are carried out by the device in a fast and reliable manner.

A no less important object of the present invention is to make available a device that uses an inexpensive label for labelling.

A further object of the present invention is to make available a device that is extremely compact and that has a simple construction. Another object of the present invention is to make available a device for the automation of the labelling that can handle and manage the label in a safe manner during each phase, without wasting material. An important object of the present invention is to make available a device that can write the labelling in a flexible manner, both in the time it takes to make and regarding its size.

### Explanation of the invention

This invention consists of a device that is fed by one or more continuous strips of labels, possibly stored in rolls, comprising;
- at least a strip of labels (2-5) comprising a plate, joined on the top of a tube by means of an intermediate connection element, and where said intermediate connection element between said plate and said tube is only located in the central part and has an extension that is limited to less than half the extension of the plate; and where said feeder or advancement unit connects to the side edges of said plate, compressing them before the advancement of the strip of labels;
- a feeder for advancing one end of at least one strip of labels for only the length, predefined or the length equal to that occupied for the whole extension of the writing, that must be affixed on the visible external side of the single plate;
- a centring device, equipped with an inserter that brings the axis of its inserter to the corresponding vertical position of the axis of the tube, and where said tube has a variable vertical position of the axis corresponding to the variable dimensions of the strip of labels, that is inserted from the free end of the strip of labels and into the tube itself, with an insertion into the cavity of the tube for a length that is less than the size of the label that will be made following the cut of said tube and keeps it in position before being cut to size;

- a cutting unit that cuts the aforementioned free end of said strip of labels to form the single label for a predefined or required length, exposed beyond the feeder;
- where said tube has a tubular configuration, and where said plate has at least one flat outer wall, and
- where said flat wall overlaps with and/or is joined only in part, and preferably only for a central symmetrical section, said connection element, with the tubular wall of the tube, and
- where said wall is flat, before or after the cutting phase, exposed for printing identifying of the end of the wire on which said label is intended to be threaded, and
- a printer, preferably a laser printer, capable of writing on said outer upper flat wall exposed to the printing device of the printer, and preferably to the laser beam of said laser printer,
- where said label consists of a material that can be written on by said printer, preferably a laser printer, and where the writing of the printing device, and preferably of the laser beam, is of a different colour and/or contrasting with the colour of the material of which the label is made.

### Advantageous characteristics of the invention

Advantageously, the cutting of the strip of labels is carried out for length of the label corresponding to the writing made by the printer, with the use of material corresponding only to the material necessary and with considerable savings compared to a standard length that must provide a label with a length equal to the maximum extension for the greater length of the writings of the lot of wires to be labelled. Advantageously, the laser printing is carried out on a plate in the correct position with respect to the laser beam and in a precise position that can exploit the space of the flat wall in the best possible way and with a collimation of the laser beam at the distance provided for the best definition of the lettering on the flat wall.

Advantageously, the feeder and the centring device, inserting and inserted within the label to be labelled, expanding the section of the cavity of the tube, and deforming and bending the walls of the cavity of the tube, do not modify, but leave unaltered the planarity of the flat surface intended to be written on by the printer which remains available for printing.

Advantageously, the centring device, inserting itself like a pin into the hollow section of the tube, is highly reliable and easily enters the hollow section of the tube, in fact, since it is a tube with a tubular configuration, which has a large hollow section, the pin has a wide margin of displacement, in any case realising the centring in the insertion.

Advantageously, the centring device, inserting itself like a pin into the hollow section of the tube, has no difficulty in being inserted, since the label does not have to be flattened during printing, since the plate already has an top flat wall available for printing, without this wall having to be created with the flattening of a tube with a tubular configuration.

Advantageously, the writing with the laser, unlike other types of writing that use ink or a ribbon in the case of thermal transfer or toner writing, does not consume toner, or ink, or ribbon, or other consumables.

Advantageously, the printed labels are completely recyclable, since they are all, and only, made up of the original material of the unprinted tube, no other elements, such as paper, ink, etc. being inserted during the printing phase.

### Brief description of the drawings

The technical characteristics of the invention, according to the aforesaid objects, can clearly be seen in the content of the claims below, and its advantages will become more readily apparent in the detailed description that follows, made with reference to the accompanying drawings, which illustrate a preferred embodiment, which is purely exemplary and not limiting, in which:

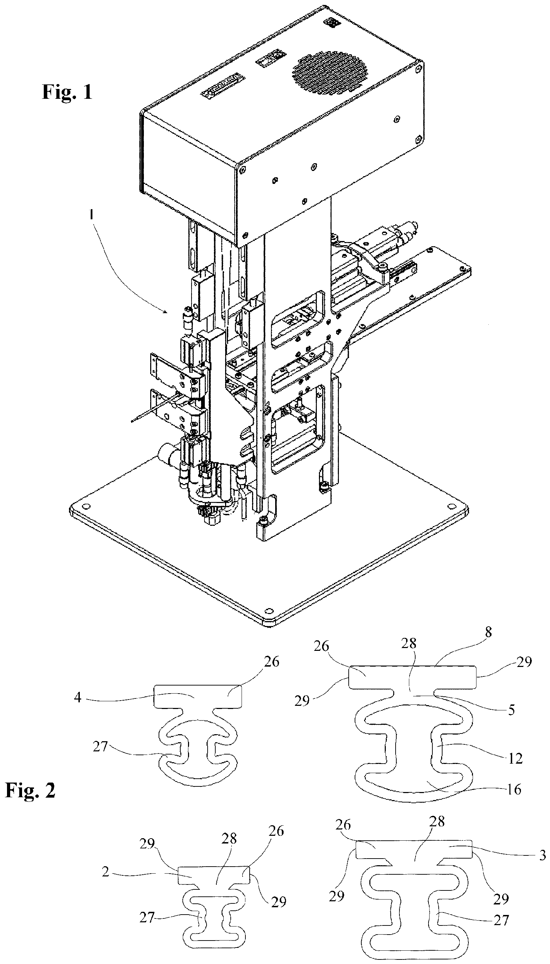

Fig. 1 shows a perspective view of the device that is the object of the present invention.
Fig. 2 shows in section a two pairs of labels of different sizes to be connected with wires of different diameters, which all have a tube with a tubular configuration joined for a central section at the top by a flat wall, on whose outer surface the printing/laser incision of the writing takes place.

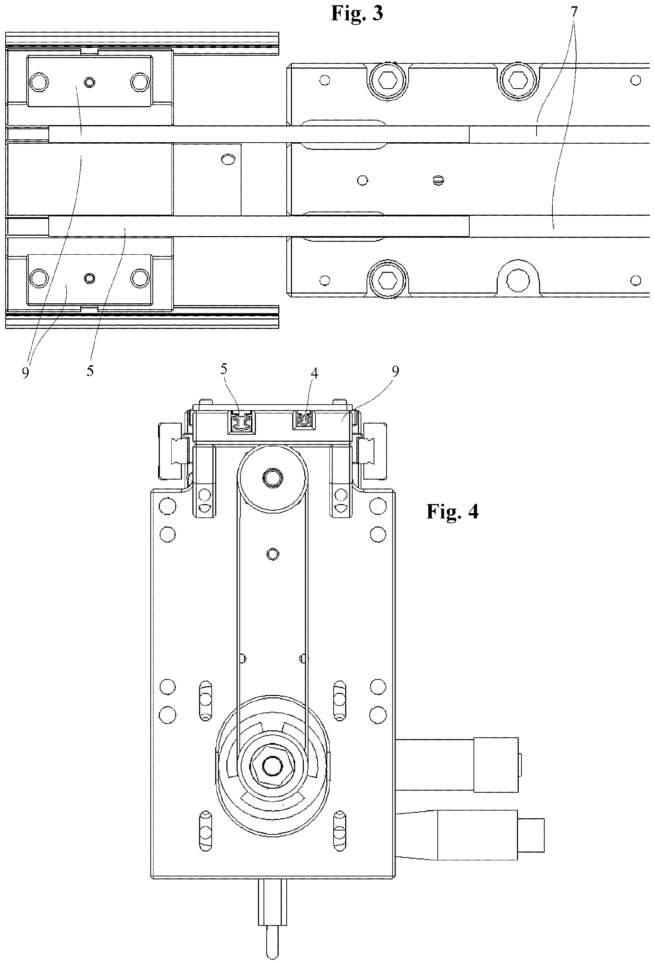

Fig. 3 shows in a plan view from above a pair of parallel chutes for feeding labels of different sizes.
Fig. 4 shows a front plan view of the power supply unit shown in fig. 3

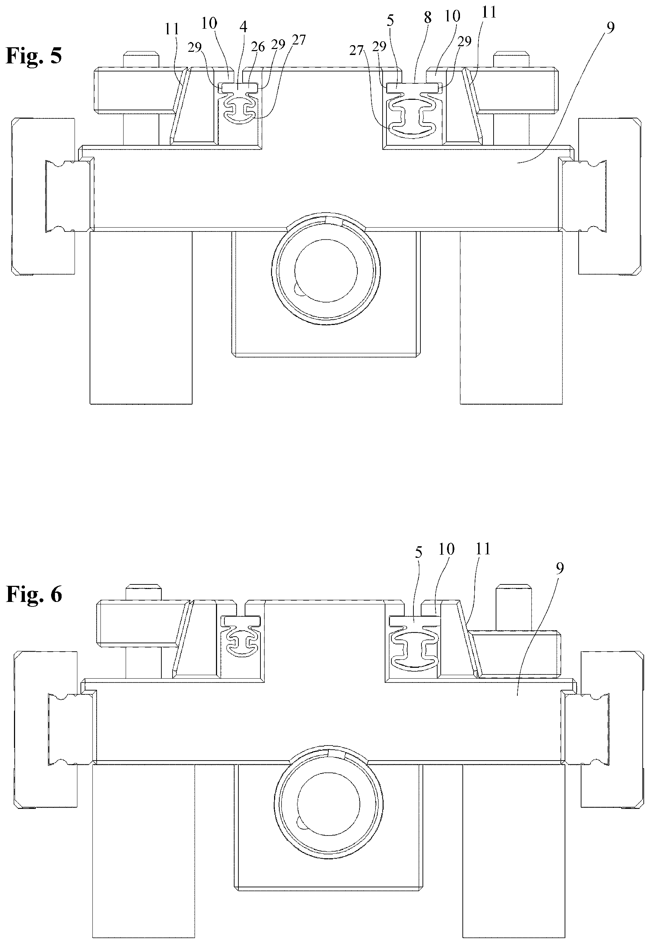

Fig. 5 shows in greater detail, according to a front plan view, the power supply unit shown in fig. 4
Fig. 6 shows what is shown in fig. 5 with the gripping elements resting on the labels.

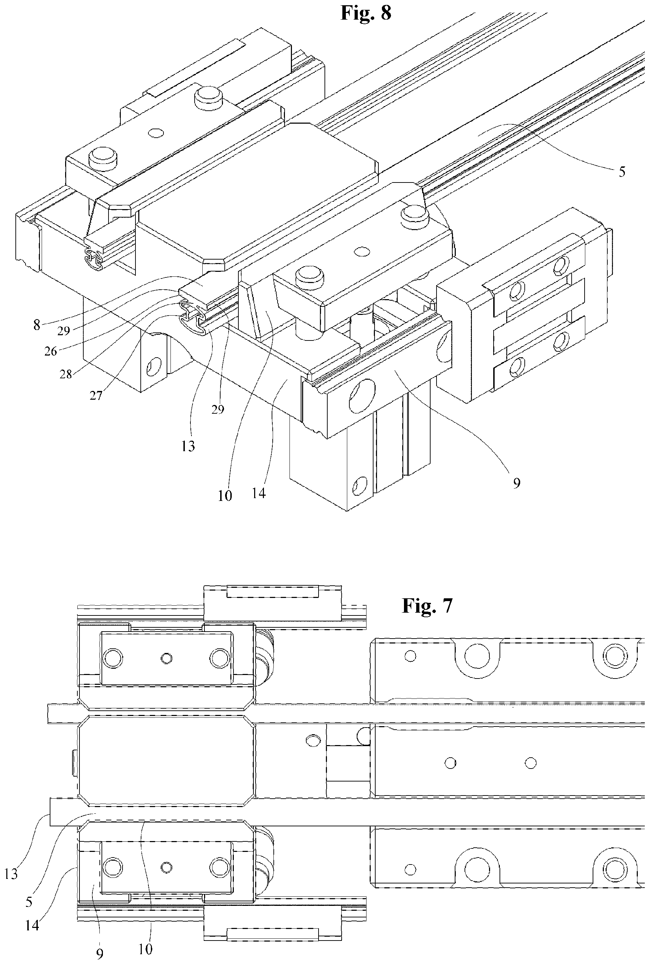

Figs. 7 and 8 show the feeding unit from a perspective view and a top view, which have brought the labels forward with a free part exposed in an overhanging fashion.

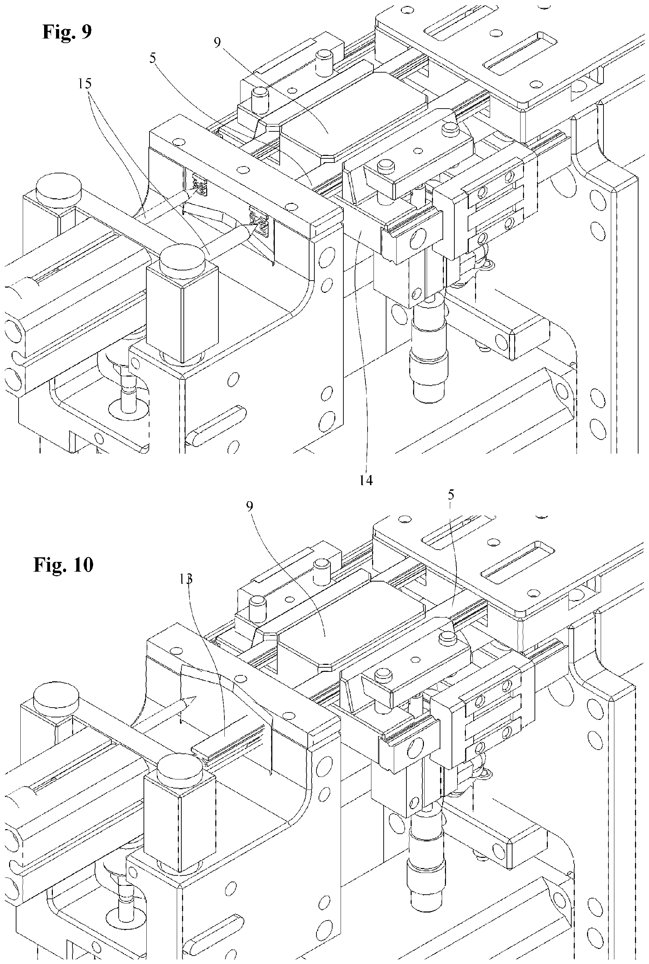

Fig. 9 shows a perspective view of the approach of the label tube to the opening pins.

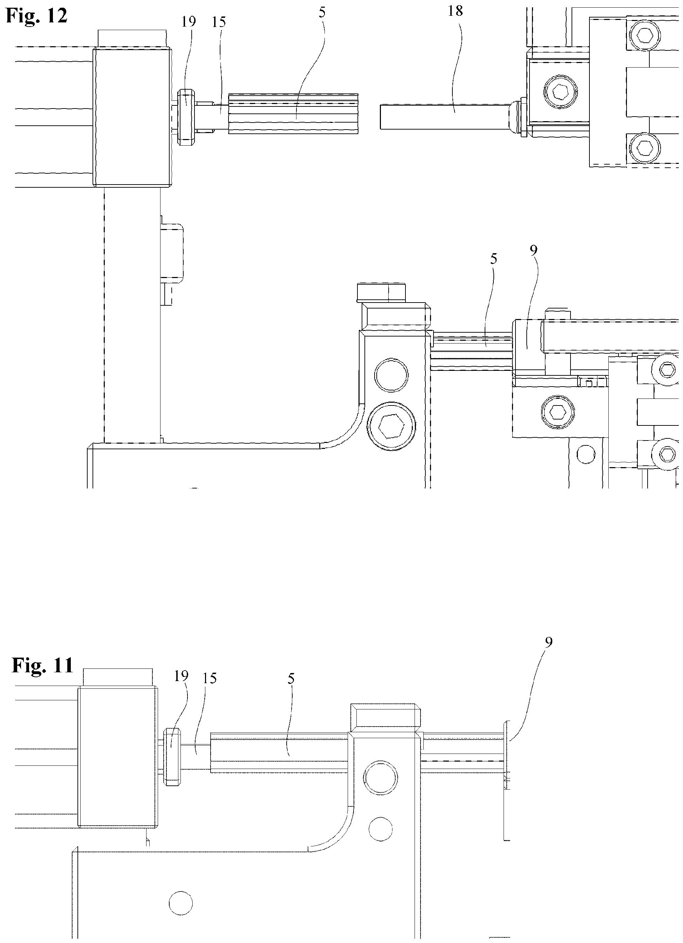

Fig. 10 and 11 show a perspective view and a lateral plan view of the entrance of the tip of the pins inside the small tube of labels advanced by the feeding unit.
Fig. 12 shows the label cut by the lower blade which has risen, and retained by the opening pins that pass completely through it.

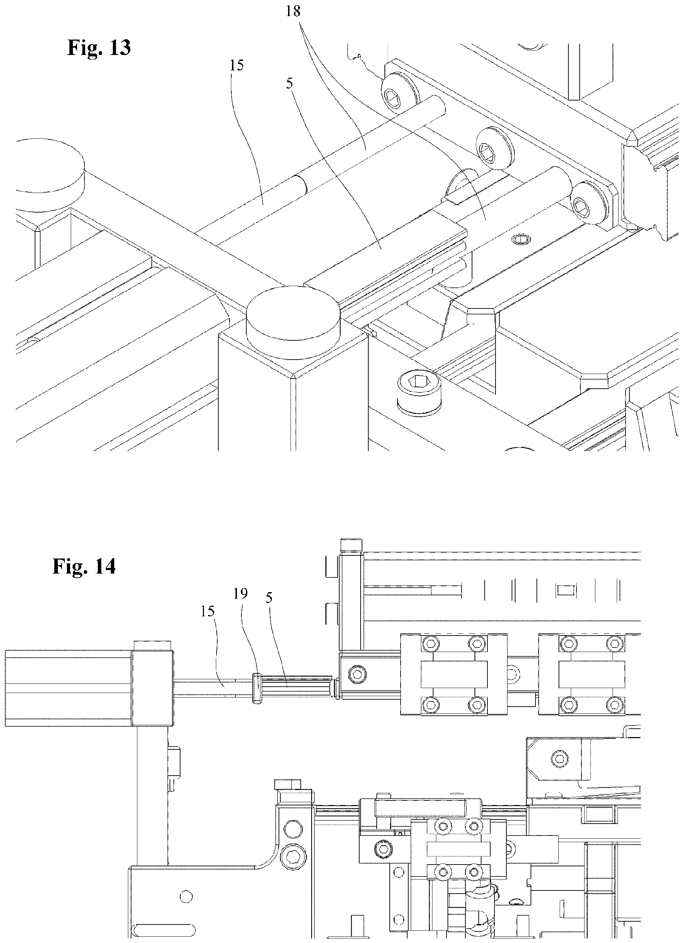

Fig. 13 shows what is shown in fig. 12 with the transfer tubes that have come close to the tube of cut labels, evidencing the alignment between the opening pins and the transfer tubes.

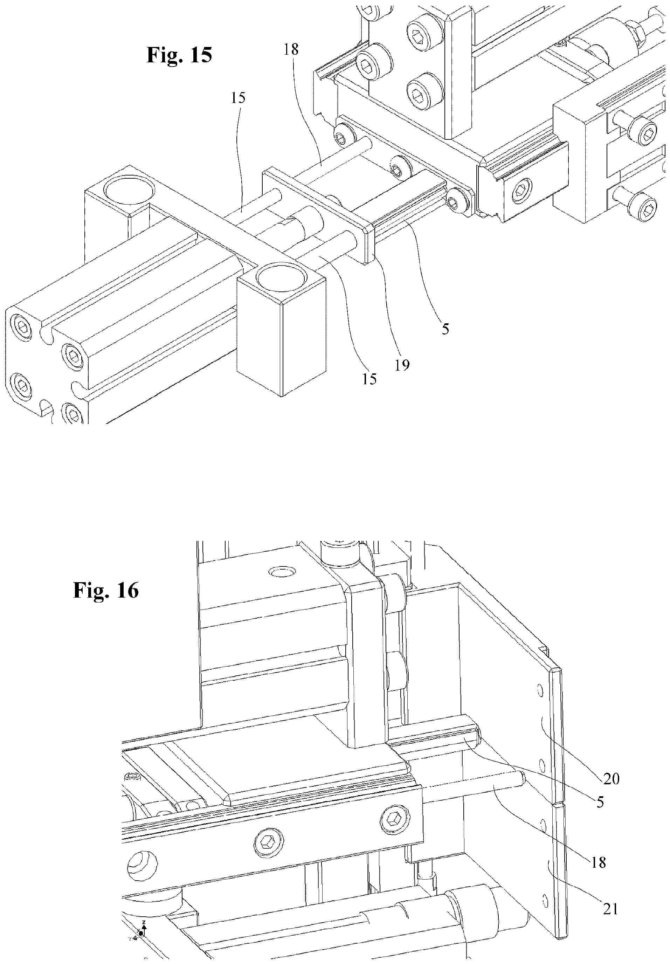

Figs. 14 and 15 show the transfer of the label from the pin onto the tube by means of a pusher element (extractor).
Fig. 16 shows the closure of the centring and coupling half-planes for inserting the end of the wire, centred in line with the small tube (interchange cylinders) that holds the label.

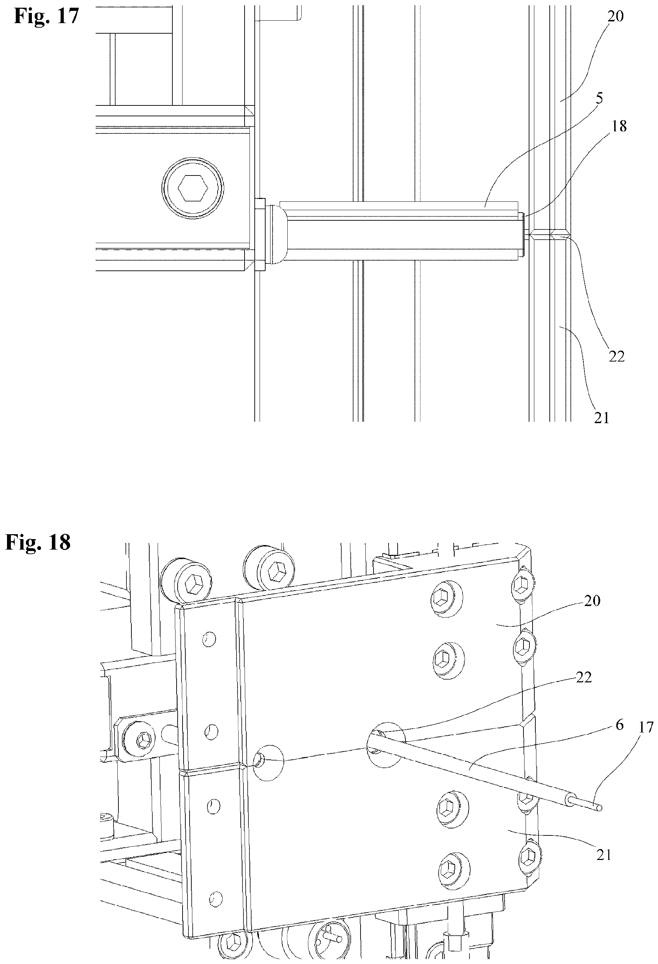

Fig. 17 shows what is shown in the previous figure seen sectioned along the axis passing through the tube.

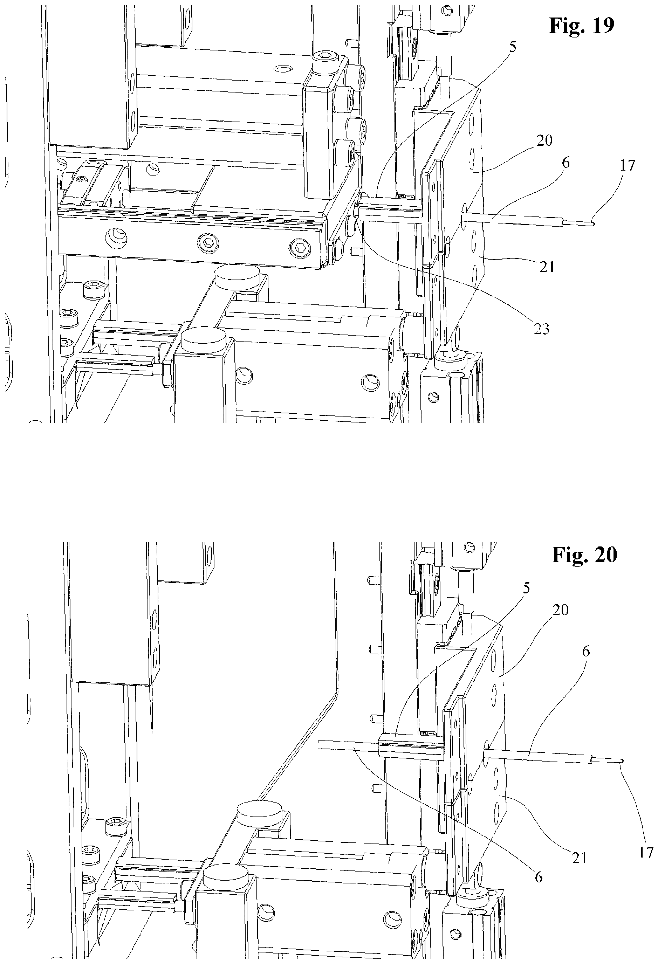

Figs. 18 and 19 show the insertion of the conductor end inserted through the centring hole of the half-planes and entering through the tube which holds the label.
Fig. 20 shows the end of the wire with the label connected after the insertion unit is retracted.

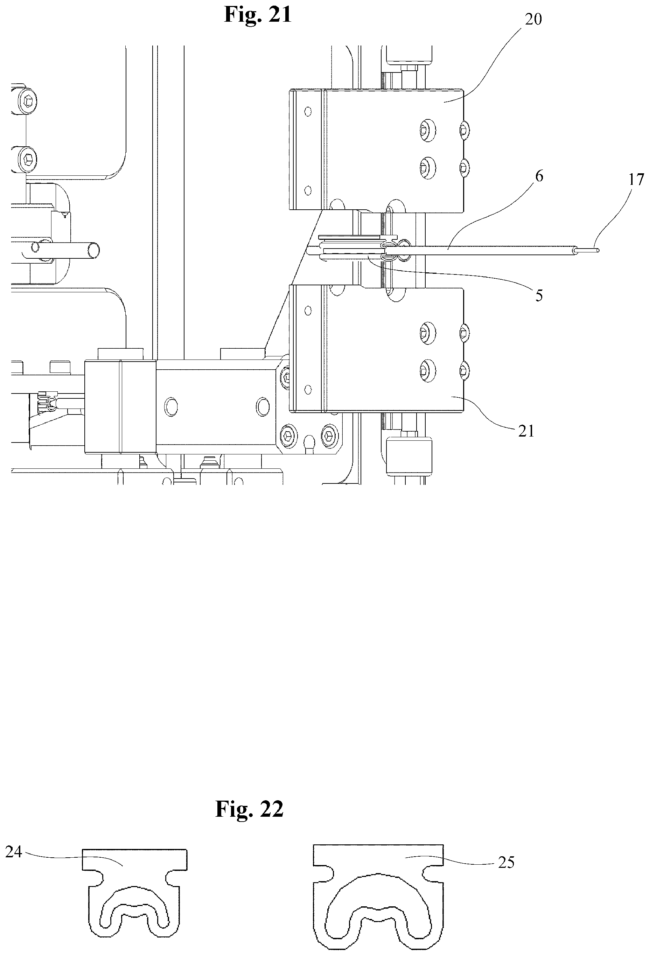

Fig. 21 shows the two centring half-planes that have reopened, leaving the wire with the label free.
Fig. 22 shows a pair of tubes whose section is made in an alternative way to that shown in the tubes shown in figure 2, different due to the presence of the deformation re-entering towards the cavity of the tube on the lower wall instead of in the side walls.

### Example of embodiment of the invention device

The device of the invention 1 uses at least one strip 2-5 of labels, possibly stored in rolls, to feed the process of writing, cutting and insertion of the label onto the cable end 6.

For descriptive convenience, reference is made to a single strip 5, however with a system that has the handling capacity of at least two strips 2-3 or 4-5, possibly paired and possibly with different sizes, it is possible without any modification to carry out the labelling, without any modification to the system, for wires 6 with sections that go from a few tenths of a millimetre, and preferably from 0.25 mm to a few millimetres, and preferably to 2.5 mm, covering most commercial cross-sections for use in the white goods and for automotive sectors, and especially in the electrical panels sector. Said strip of labels 2-5 comprising a plate 26, joined on the top of a tube 27 by means of an intermediate connection element 28, and where said intermediate connection element between said plate and said tube is only located in the central part and has an extension that is limited to less than half the extension of the plate 26.

Said strip 5 from the magazine is channelled into a guide or chute 7 capable of keeping it in position, possibly leaving the upper flat wall 8 of the plate 26 free and available, with which the label 5 is equipped, for writing by a remote laser printer.

At the end of the guide there is a feeding or advancement unit 9 made by means of a flat element 10 that approaches from the side, pushed by an inclined plane 11, to the tube 5.

Said flat element 10 reproduces, at least in part, in negative the lateral profile 12 of the strip, and due to the considerable rectilinear extension of approach to the tube 5, creates considerable friction, in such a way as to follow said flat element 10 in its translation movement and advancement towards the free part of the advancement unit 9.

Advantageously said feeder or advancement unit 9 connects to the side edges 29 or the side walls of said plate 26, compressing them before the advancement of the strip of labels.

Successively, a centring device quipped with an inserter that brings the axis of its inserter to the corresponding vertical position of the axis of the tube 27, and where said tube 27 has a variable vertical position of the axis corresponding to the variable dimensions of the strip of labels; said inserter is inserted like a pin (15) in and from the end of the free section (13) of the strip of labels (2-5) with an insertion into the cavity (16) of the tube (2-5) itself to a length less than the size of the label that will be made after the cutting of said strip of labels (2-5) and holds it in position before being cut to size. In the free part 14 of the feed unit 9 the said strip 5 meets a pin 15 with its initially pointed/conical/sharp part to be inserted into the empty 16 and free 13 section of the tube 27.

This amount of advancement by the advancement unit 9 is precisely controlled and preferably corresponds to the minimum length provided for the writing that must be affixed by a laser printer, located at a distance and not in contact, on the flat 8 and upper free side of said plate 26.

After the strip 5 has advanced all the way required, by hitting the relative pin 15, before or immediately after the cut to size of the label 5, when there is still a precise control over the disposition of the tube of label 5, the printing of the relevant of the relevant characters on the flat wall 8 of the plate 26, by means of said remote and non-contact laser printer, which creates indelible and always clear writing on the external and flat wall 8 of the plate 26.

By means of the aforementioned remote and non-contact laser printer it is therefore possible to have a clear and evident writing on the flat surface 8 of the plate 26, possibly both straight and upside down in order to be applied on the head or tail of the end 17 of the electrical conductor 6 to be labelled, and can, in the unforeseen case of a reprint, be carried out immediately without hindering the procedure and without any delay in execution.

By combining the prediction of how far the text extends and the controlled advancement by the feeder unit 9, it is possible to cut the label 5 to the exact length necessary without waste or involuntary cuts on the writing.

After inserting the entire part of the tube 27 on the pin 15, inside its hollow section 16, a cutting blade cuts the label 5, detaching and making the label 5 arranged on the pin 15 independent from the tube of labels 5.

Then a shift of the needle 15 takes place to bring it in line with an interchange cylinder 18 and is transferred here by an extractor unit 19 that pushes said label from the needle to the interchange cylinder. Said interchange cylinder 18 has a free internal diameter at least equal to the diameter of the conductor 6 to be labelled.

Two centring half-planes 20, 21 are then positioned in front of said interchange cylinder 18 that form on the approach plane a hole 22 in line with said cylinder 18 and with a diameter at least equal to the diameter of the conductor 6 to be labelled.

A wire 6 is then inserted through said hole 22 of the centring half-planes 20, 21, and pushed to cross said interchange cylinder 18 that carries the label 5 onto the outer surface of the flat wall 8.

For the retraction of the interchange cylinder 18 into its own perforated housing 23, the hole of which is at least slightly smaller than the dimensions of the interchange cylinder 18 forces the label 5 to slide on said cylinder 18, remaining to affect the relative end of the wire 6 which had been inserted and is present inside said cylinder 18 and therefore the tube 27 is extracted from the cylinder 18 and the label 5 is transferred onto the wire end 6.

The opening of the centring halves 20, 21 frees the end of the electrical conductor 6 for subsequent use or storage.

The foregoing can also be applied without modifications to an alternative configuration of the strips 2-5, such as the one shown in the strips 24, 25. In fact, also the strips 24, 25 have a configuration that at the top have a plate with a flat upper wall 8 suitable for being written on remotely by a laser printer, a side wall that can easily connect with a feeding or advancement unit 9, and have a considerable deformation in its lower wall, so that it can, with its own elasticity to return after having been spread apart, to connect with the electrical conductors 6 inserted inside it; however this substantial deformation leaves a considerable free part of the hollow section facilitating the entry of said pin 15 and so that it can be separated by a pin without modifying the position of the upper flat wall.

## Claims

1. Device for the automation of the labelling of electrical cable terminals, which is fed by one or more continuous strips (2-5) of labels, comprising:
- at least a strip of labels (2-5) comprising:
a plate, wherein the plate comprises at least one outer upper flat wall (8); a tube;
an intermediate connection element;
said plate being joined on the top of said tube by means of said intermediate connection element, and where said intermediate connection element between said plate and said tube is only located in the central part and has an extension that is limited to less than half the extension of the plate;
- a feeder or advancement unit (9) for the advancement of one end of the free section (13) of at least one strip of labels (2-5) for just the predefined length or the length equal to that occupied for the entire length of the writing that must be affixed to the outer visible side of the single plate; and where said feeder or advancement unit connects to the side edges of said plate, compressing them before the advancement of the strip of labels;
- a centring device, equipped with an inserter that brings the axis of its inserter to the corresponding vertical position of the axis of the tube, and where said tube has a variable vertical position of the axis corresponding to the variable dimensions of the strip of labels, that is inserted like a pin (15) in and from the end of the free section (13) of the strip of labels (2-5) with an insertion into the cavity (16) of the tube (2-5) itself to a length less than the size of the label that will be made after the cutting of said strip of labels (2-5) and holds it in position before being cut to size;
- a cutting unit that cuts the free end of said strip of labels (2-5) to form the single label with a predefined or necessary length, exposed beyond the feed or advancement unit (9);
- where said flat wall (8), before or after the cutting phase, exposed for printing to identify the terminal of the electrical conductor (6) on which said label consisting of the piece of the strip of labels (2-5) is to be inserted, and
- a laser printer, capable of writing on said outer upper flat wall (8) exposed to the laser beam of said laser printer,
- where said label consisting of the piece of the strip of labels (2-5) consisting of a material that can be written on by said laser printer, and where the writing of the printing device of the laser beam, is a different colour to and/or contrasting with the colour of the material of which the label is made.

2. Device for the automation of the labelling of electrical cable terminals according to claim 1, **characterised by** the fact that the length of the of the piece of the strip of labels (2-5) that constitutes the label, made by cutting the strip of labels, corresponds to the length of the writing carried out by the printer, using only the amount of material actually required.

3. Device for the automation of the labelling of the terminals (17) of electrical conductors (6) according to claim 1, **characterised by** the fact that the said laser printing is carried out on the upper flat wall (8) of a plate consisting of a piece of the strip of labels (2- 5) in the correct position with respect to the laser beam and in the precise positioning that can make use of the space of the flat wall in the best possible way, and with a collimation of the laser beam at the precise distance for the best definition of the writing on the flat wall (8).

4. Device for the automation of the labelling of electrical cable terminals according to claim 1, **characterised by** the fact that the feed or advancement unit (9) and the centring device, inserting itself and inserted within the label to be labelled, expanding the empty and hollow section (16) of the cavity of the tube (2-5), and deforming and bending the walls of the cavity of the tube, do not modify, but rather leave unaltered, the planarity of the upper flat wall (8) that is to be written on by the printer that remains available for the printing.

5. Device for the automation of the labelling of electrical cable terminals according to claim 1, **characterised by** the fact that writing with the said laser beam leaves the composition of the label unchanged, making it a recyclable label, since no toner, ink, or ribbon is inserted into the printed label, or other consumables or paper.

6. Device for the automation of the labelling of electrical cable terminals according to claim 1, **characterised by** the fact that the insertion of the centring device, like a needle (15), within the empty and hollow section (16) in the free section (13) of the tube (2-5) is highly reliable since there is a considerable hollow, and not crushed, section of the tube itself.

## Patentansprüche

1. Vorrichtung zur Automatisierung der Etikettierung von elektrischen Kabelanschlüssen, die mit einem oder mehreren Endlosstreifen (2-5) von Etiketten gespeist wird, umfassend:
- mindestens einen Etikettenstreifen (2-5) umfassend:
eine Platte, wobei die Platte mindestens eine äußere obere flache Wand (8) umfasst;
ein Rohr;
ein Zwischenverbindungselement;
wobei die Platte über das Zwischenverbindungselement mit dem oberen Teil des Rohrs verbunden ist und das Zwischenverbindungselement zwischen der Platte und dem Rohr nur im mittleren Teil angeordnet ist und eine Ausdehnung hat, die auf weniger als die Hälfte der Ausdehnung der Platte begrenzt ist;
- eine Zuführungs- oder Vorschubeinheit (9) zum Vorschieben eines Endes des freien Abschnitts (13) mindestens eines Etikettenstreifens (2-5) um genau die vorgegebene Länge oder um die Länge, die der gesamten Länge des Schriftzugs entspricht, der auf der äußeren sichtbaren Seite der einzelnen Platte angebracht werden muss; und wobei die Zuführungs- oder Vorschubeinheit an die Seitenränder der Platte anschließt und sie vor dem Vorschub des Etikettenstreifens zusammendrückt;
- eine Zentriervorrichtung, die mit einem Einleger ausgestattet ist, der die Achse seines Einlegers in die entsprechende vertikale Position der Achse des Rohrs bringt, und wobei das Rohr eine variable vertikale Position der Achse aufweist, die den variablen Abmessungen des Etikettenstreifens entspricht, der wie ein Stift (15) in und von dem Ende des freien Abschnitts (13) des Etikettenstreifens (2-5) mit einer Einführung in den Hohlraum (16) des Rohrs (2-5) selbst bis zu einer Länge eingeführt wird, die geringer ist als die Größe des Etiketts, das nach dem Schneiden des Etikettenstreifens (2-5) hergestellt wird, und es in Position hält, bevor es zugeschnitten wird;
- eine Schneideeinheit, die das freie Ende des Etikettenstreifens (2-5) abschneidet, um ein einzelnes Etikett mit einer vordefinierten oder erforderlichen Länge zu bilden, das über die Zuführungs- oder Vorschubeinheit (9) hinausragt;
- wobei die flache Wand (8) vor oder nach der Schneidphase zum Bedrucken freiliegt, um den Anschluss des elektrischen Leiters (6) zu kennzeichnen, auf den das aus dem Stück des Etikettenstreifens (2-5) bestehende Etikett aufgelegt werden soll, und
- einen Laserdrucker, der auf die äußere obere flache Wand (8) schreiben kann, die dem Laserstrahl des Laserdruckers ausgesetzt ist,
- wobei das Etikett aus dem Teil des Etikettenstreifens (2-5) besteht, der aus einem Material besteht, das von dem Laserdrucker beschrieben werden kann, und wobei die Schrift der Druckvorrichtung des Laserstrahls eine andere Farbe hat als die Farbe des Materials, aus dem das Etikett besteht, und/oder mit dieser kontrastiert.

2. Vorrichtung zur Automatisierung der Etikettierung von elektrischen Kabelanschlüssen nach Anspruch 1, **dadurch gekennzeichnet, dass** die Länge des das Etikett bildenden Teils des Etikettenstreifens (2-5), der durch Schneiden des Etikettenstreifens hergestellt wird, der Länge der vom Drucker ausgeführten Beschriftung entspricht, wobei nur die tatsächlich erforderliche Materialmenge verwendet wird.

3. Vorrichtung zur Automatisierung der Beschriftung der Anschlüsse (17) von elektrischen Leitern (6) nach Anspruch 1, **dadurch gekennzeichnet, dass** der Laserdruck auf der oberen flachen Wand (8) einer Platte, die aus einem Stück des Etikettenstreifens (2-5) besteht, in der richtigen Position in Bezug auf den Laserstrahl und in der präzisen Positionierung, die den Raum der flachen Wand am besten ausnutzen kann, und mit einer Kollimation des Laserstrahls in der präzisen Entfernung für die beste Definition der Schrift auf der flachen Wand (8) ausgeführt wird.

4. Vorrichtung zur Automatisierung der Etikettierung von elektrischen Kabelanschlüssen nach Anspruch 1, **dadurch gekennzeichnet, dass** die Zuführ- oder Vorschubeinheit (9) und die Zentriervorrichtung, die sich selbst einführt und in das zu etikettierende Etikett eingeführt ist, den leeren und hohlen Abschnitt (16) des Hohlraums des Rohrs (2-5) ausdehnt und die Wände des Hohlraums der Hülse verformt und biegt, die Ebenheit der oberen flachen Wand (8), die vom Drucker zu beschriften ist, nicht verändert, sondern unverändert lässt, die für den Druck verfügbar bleibt.

5. Vorrichtung zur Automatisierung der Etikettierung von elektrischen Kabelanschlüssen nach Anspruch 1, **dadurch gekennzeichnet, dass** das Schreiben mit dem Laserstrahl die Zusammensetzung des Etiketts unverändert lässt, was es zu einem wiederverwendbaren Etikett macht, da kein Toner, keine Tinte, kein Farbband, kein anderes Verbrauchsmaterial und kein Papier in das gedruckte Etikett eingebracht wird.

6. Vorrichtung zur Automatisierung der Kennzeichnung von elektrischen Kabelanschlüssen nach Anspruch 1, **dadurch gekennzeichnet, dass** das Einführen der Zentriervorrichtung, wie einer Nadel (15), in den leeren und hohlen Abschnitt (16) im freien Abschnitt (13) des Rohres (2-5) sehr zuverlässig ist, da ein erheblicher hohler und nicht gequetschter Abschnitt des Rohres selbst vorhanden ist.

## Revendications

1. Dispositif pour l'automatisation de l'étiquetage des bornes de câbles électriques, qui est alimenté par une ou plusieurs bandes continues (2-5) d'étiquettes, comprenant :
- au moins une bande d'étiquettes (2-5) comprenant :
une plaque, laquelle plaque comprend au moins une paroi externe plate;
un tube;
un élément de connexion intermédiaire ;
ladite plaque étant jointe sur le dessus dudit tube au moyen dudit élément de connexion intermédiaire, et où ledit élément de connexion intermédiaire entre ladite plaque et ledit tube n'est situé que dans le segment central et a une extension limitée à moins de la moitié de l'extension de la plaque ;
- une unité d'alimentation ou d'avancement (9) pour l'avancement d'une extrémité de la section libre (13) d'au moins une bande d'étiquettes (2-5) uniquement sur la longueur prédéfinie ou sur la longueur égale à celle occupée sur toute la longueur de l'inscription qui doit être apposée sur la face extérieure visible de la seule plaque ; et où ladite unité d'alimentation ou d'avancement se connecte aux bords latéraux de ladite plaque, les comprimant avant l'avancement de la bande d'étiquettes ;
- un dispositif de centrage, équipé d'un introducteur qui amène l'axe de son introducteur à la position verticale correspondante de l'axe du tube, et où ledit tube a une position verticale variable de l'axe correspondant aux dimensions variables de la bande d'étiquettes , qui est insérée comme une broche (15) dans et depuis l'extrémité de la section libre (13) de la bande d'étiquettes (2-5) avec une insertion dans la cavité (16) du tube (2-5) lui-même à une longueur inférieure à la dimension de l'étiquette qui sera réalisée après la découpe de ladite bande d'étiquettes (2-5) et la maintient en position avant d'être découpée à dimension ;
- une unité de coupe qui coupe l'extrémité libre de ladite bande d'étiquettes (2-5) afin de former la seule étiquette avec une longueur prédéfinie ou nécessaire, exposée au-delà de l'unité d'alimentation ou d'avancement (9) ;
- où ladite paroi plate (8), avant ou après la phase de découpe, exposée pour l'impression afin d'identifier la borne du conducteur électrique (6) sur laquelle ladite étiquette composée d'un segment de la bande d'étiquettes (2-5) doit être insérée, et
- une imprimante laser, capable d'inscrire sur ladite paroi externe supérieure plate (8) exposée au faisceau laser de ladite imprimante laser,
- où ladite étiquette composée d'un segment de la bande d'étiquettes (2-5) composée d'un matériel inscriptible par ladite imprimante laser, et où l'inscription du dispositif d'impression du faisceau laser, est d'une couleur différente de et/ou contrastant avec la couleur du matériel dont est faite l'étiquette.

2. Dispositif pour l'automatisation de l'étiquetage des bornes de câbles électriques selon la revendication 1, **caractérisé par le fait que** la longueur du segment de bande d'étiquettes (2-5) qui constitue l'étiquette, réalisée en coupant la bande d'étiquettes, correspond à la longueur de l'inscription effectuée par l'imprimante, en n'utilisant que la quantité de matériel vraiment nécessaire.

3. Dispositif pour l'automatisation de l'étiquetage des bornes (17) de conducteurs électriques (6) selon la revendication 1, **caractérisé par le fait que** ladite impression laser est réalisée sur la paroi supérieure plane (8) d'une plaque constituée d'un segment de la bande d'étiquettes ( 2- 5) dans la position correcte par rapport au faisceau laser et dans le positionnement précis permettant d'exploiter au mieux l'espace de la paroi plate, et avec une collimation du faisceau laser à la distance précise pour la meilleure définition de l'inscription sur la paroi plate (8).

4. Dispositif pour l'automatisation de l'étiquetage des bornes de câbles électriques selon la revendication 1, **caractérisé par le fait que** l'unité d'alimentation ou d'avancement (9) et le dispositif de centrage, s'insérant et inséré à l'intérieur de l'étiquette à étiqueter, dilatant la section vide et creuse (16) de la cavité du tube (2-5), et déformant et pliant les parois de la cavité du tube, ne modifient pas, mais laissent plutôt inchangée, la planéité de la paroi supérieure plate (8) qui doit être inscrite par l'imprimante laquelle reste disponible pour l'impression.

5. Dispositif pour l'automatisation de l'étiquetage des bornes de câbles électriques selon la revendication 1, **caractérisé par le fait que** l'inscription avec ledit faisceau laser laisse la composition de l'étiquette inchangée, ce qui en fait une étiquette recyclable, puisqu'aucun toner, encre, ou ruban n'est inséré dans l'étiquette imprimée, ou autres consommables ou papier.

6. Dispositif pour l'automatisation de l'étiquetage des bornes de câbles électriques selon la revendication 1, **caractérisé par le fait que** l'insertion du dispositif de centrage, à la manière d'une aiguille (15), à l'intérieur de la section vide et creuse (16) de la section libre (13) du tube (2-5) est très fiable car le tube lui-même a une section creuse considérable, et non écrasée.
